(19) Europäisches Patentamt
European Patent Office
Office européen des brevets

(11) Publication number: 0 275 842 A1

# (12) EUROPEAN PATENT APPLICATION

(21) Application number: 87830448.4

(22) Date of filing: 18.12.87

(51) Int. Cl.4: F02B 47/04 , F23L 7/00 , C10L 1/10

(30) Priority: 19.12.86 IT 361786

(43) Date of publication of application: 27.07.88 Bulletin 88/30

(84) Designated Contracting States: ES GR

(71) Applicant: Di Liddo, Angelo Nicola
Via XX Settembre 95
I-44100 Ferrara(IT)

(72) Inventor: Di Liddo, Angelo Nicola
Via XX Settembre 95
I-44100 Ferrara(IT)

(74) Representative: Fiammenghi Domenighetti, Delfina et al
Via Quattro Fontane 31
I-00184 Rome(IT)

## (54) Method for optimizing combustion processes by mixing an aqueous saline aerosol containing ionic species to the combustion air and improved apparatus for an automatic control of said mixing.

(57) A method for optimizing the combustion process using commercial fuels and which reduces noxious and pollution products in the exhaust gases, by providing of branching out of a part of the combustion air, which by suction and/or by utilizing an additional stream of compressed air is caused to bubble in an aqueous saline solution, in which the following ionic species are dissolved : cations: sodium, calcium, magnesium, potassium, ammonium; anions: chloride, sulphate, bicarbonate, nitrate, bromide, in amounts comprised between particular values. On the surface of said solution a layer of a liquid not mixable with water is provided.

The aerosol thus produced is conveyed into the combustion chamber (4), where the other part of the air necessary for combustion is fed.

The invention also provides an improved apparatus for carrying out said method and which comprises a conventional equipment (8, 8a, 1, 3) for producing the aerosol and a device for automatically controlling the air flow rate of said air enriched with aerosol and which, through a sensing means (PC; 6, 7) operates in response to predetermined conditions of the combustion process.

11
2
18
R
18
8
L
17
PC
V
15
16
3
4
5
8
3
13
8a
1
14
12

FIG.1

EP 0 275 842 A1

# METHOD FOR OPTIMIZING COMBUSTION PROCESSES BY MIXING AN AQUEOUS SALINE AEROSOL CONTAINING IONIC SPECIES TO THE COMBUSTION AIR AND IMPROVED APPARATUS FOR AN AUTOMATIC CONTROL OF SAID MIXING.

The invention relates to a method for optimizing the combustion processes of internal combustion engines, heat generators, furnaces and the like, said method substantially reducing the energetic comsumptions, the amounts of the noxious emissions from any kind of commercial fuel, improving the process efficiency, said optimization being obtained by feeding an aqueous aerosol formed from an aqueous solution containing particular dissolved ionic species into the duct conveying additional air into the combustion chamber.

It is known, that in the combustion of hydrocarbons the mechanism, and the reaction products undergo a change according to the conditions, in which the combustion takes places. Therefore more in particular, when weak reactive (combustion air/fuel) mixtures are used, with excesses of combustion air, compared with the stoichiometric quantities of air, the combustior process can reach its "completion". Products of a perfect combustion, which consist of water and carbon dioxide are obtained. However, some reactions cannot reach their "completions" as a consequence of "non-equilibrium conditions".

Furthermore, by mixtures of rich reagents i.e. with excess of fuel with respect to the stoichiometric quantity of air, part of the fuel does not react, so that after combustion, products of an imperfect combustion, such as CO, $NO_X$, policyclic aromatic hydrocarbons (PAH) and the like, are evidenced.

It is known that during the combustion process the temperature and pressure conditions play a great role on the kinetics of the formation of several active intermediates to the point that the whole velocity of process is altered, in which they take part, as chain transporters, free radicals, such as H,O,$CH_3$, $HO_2$ and the like...

The reactions proceed, in general, by free-radical mechanisms and thus are susceptible to wall "quenching"; they are affected by the stabilizing action of radicals, produced by species, such as $NO_2$ and by branched chain hydrocarbons (see Verheim and Schneider, 1965).

It is known from the prior Art that reduction of emissions of unburnt pollutants during the combustion processes has been obtained up to now by means of different technologies, some of which can be cited, merely by way of example, i.e. specifically those applied for internal combustion engines, which follow:

1. Engine modifications consisting in changing the air/fuel ratios, the ignition advance, the distribution timing system, etc.

2. Thermal post-burning through the air injection in the exhaust manifold by means of automatic valves (Exhausted Gas Recirculation, EGR); has been carried out.

3. Oxidation catalysts have been provided, in addition of the use of a thermal post-burning (EGR) on conventional engines.

4. In more modern cars, prevision has been made of the use of "learn-burn" engines with very weak mixtures (air/fuel ratio of 20:1) and oxidation catalysts for unburned hydrocarbons in the exhaust gases.

5. In the United States of America triple effect catalysts (3xcat) are mostly used, which catalyze both oxidation (CO, PAH) and reduction reactions ($NO_X$) in the exhaust gases.

The proper operation of these catalysts requires necessarily to operate within a strict range of the air/fuel ratio, about the stoichiometric ratio, but to such a purpose it is required to use an electronic device for controlling the mixture carburation, controlled by an $O_2$ probe placed into the exhaust gas manifold. Even if costs, although relevant, are not taken into consideration, the fixed bed catalytic reactors up to now constructed, do not permit to attain satisfactory results during variable operation conditions of the engines, such as, for instance, during warm-up and in heavy city traffic conditions; said conditions, as it is well known, produce higher amounts of noxious gaseous emissions than in steady-state conditions.

It is also known in the prior Art that proposals for addition of peculiar substances to fuels have already been made, particularly for boilers, in order to improve the elimination of unburned compounds in the combustion gases. Among said substances, Mg and Mn, as oxides and/or hydroxides, as well as other substances, prevailingly added, as powder or as suspension, to limit the $SO_2$ and $SO_3$ acid emissions, have been proposed, said methods being described in Italian Patents No.973.808 and 973.809, 1974).

Problems may arise with these additives, especially when used in great amounts. They cause incrustations into boilers and produce high amounts of ashes, so that it is required to stop the process for the plant cleaning operations. Furthermore these reagents are expensive so that, if used in great quantities, they increase, in remarkable manner, the running costs of thermal plants. It is aso known that gaseous ammonia has been already utilized in coal thermal plants, in order to reduce NO to nitrogen and water, even in presence of oxygen (US Patent 3.900.559, 1975).

However, it is necessary to mix ammonia with gaseous hydrogen (or methane) in order to decrease the temperature, at which the reaction takes place, down to levels economically acceptable.

Other methods of conditioning the combustion gases have been proposed in the Italian Patent Application No. 48453-A/81 (1981) and particularly, as far as the use of additives as ammonium phosphate and urea are concerned.

Common characteristics of the aforementioned methods, as state of the Art, concern the relatively high concentrations of the used additives, said concentrations ranging between hundreds and thousends of parts per million with respect to the burned fuel.

It is also known that the energetic yield of fuels (gaseous, liquid, fossil fuels, including coal) increases, if moderate quantities of steam even saturated with NaCl are introduced in the system (Italian patent Applications No. 84963-A/80 and 195711-A/85).

These techniques, however, depend mostly on atmospheric conditions and, particularly, on the relative humidity of the air.

In these last methods the control of the amount of steam saturated air, which has to be fed in the combustion zone, particularly in variable operation regime, has a considerable importance. In fact the method gives advantages, only if an optimal air amount is fed. The air flow rate is generally controlled by manual and/or electro-valves or other suitable devices, decribed in the Italian patent application No.195711-A/85. These devices do not permit to tune up the engine running, as the regime of the engine revolutions changes.

The task of the present invention is that of promoting a more complete oxidation of the presently unburned products (CO,PAH, etc.) in the combustion processes and of decreasing emissions of nitrogen oxides ($NO_X$), polluting smokes and powders, with remarkable advantages as far, as energy saving and running costs are concerned. This method provides to use peculiar additives, in ionic form and in aqueous solution and which have to be present in a quantity which consists in an amount approximately not higher than those which have been used in the preceding methods.

That reduces drastically the running costs, the risks of incrustation formations, the residual ash amounts and the pollutant emissions into the atmosphere.

The invention is applied by the use of a peculiar, "per se" conventional apparatus for aerosol production and of a non-conventional, simple and non expensive device, by means of which an automatic control of the stream of the required air is carried out in order to feed in the combustion zone the correct amount of aerosol, saturated in ionic species, necessary to the process.

The advantages obtained by the present invention essentially consist in less energetic comsumptions and in a decreased atmospheric pollution with respect to the prior Art: furthermore the proposed method, in the case of endothermic engines, can be supplied also on motor-vehicles provided with post-combustion catalysts. The method, either in the most simple condition, or in the complex ones, is little expensive: it is easy to be carried out and the apparatus requires a very reduced maintenance. Another advantage of the present invention consists in the fact that the described method can be applied to all the combustion systems. Therefore, it will be susceptible of adaptations, modifications and variants, according to the type of the used fuel, and which have to be considered comprised within the application field of the informing principle of the present invention.

The above method, described in detail later on, is based on the observation, that the presence of $NO_3^-$ , $Br^-$, $NH_4^+$ , $K^+$ ions in an aqueous aerosol, sent together with other components, directly in a flame, implies the formation of free/oxidizing radicals of the kind O, OH, $HO_2$ and reducing agents of the kind H, with considerable advantages in the completion of the combustion reactions. From the inorganic chemistry it is known, that potassium salts (as, for instance, $KNO_3$) at temperatures ranging between 800-1000°C decompose, forming oxide ($K_2O$) and peroxide ($K_2O_2$) of potassium. $K_2O_2$ is not stable and it further decomposes in "warm" condition in $K_2$ and atomic oxygen, acting as a strong oxidizer. Another intermediate, formed in a thermal decomposition, is the potassium superoxide ($KO_2$) which also reacts in "warm" conditions, acting as an active oxidizing agent still releasing atomic oxygen (see Wilkinson Interscience, 1972).

It is also known from inorganic chemistry that the compounds of the kind $NH_4NO_3$ decompose by heat, forming nitrous oxide which, at temperatures higher than 600°C splits into the highly reactive nitrogen and oxigen atoms. It has been now found, that the presence of a combination of substances generating free radicals in a flame, such as, potassium and ammonium nitrates, the bromide and chloride ions, promotes the combustion process more effectively than that has been mentioned in the prior Art, reducing, in substantial manner the unburned compounds (CO, PAH, etc), enhancing the combustion reactions in the direction of the final oxidation products ($CO_2$).

The free radicals produced near the front of the flame positively affect the combustion yield, since they promote a more intimate contact between fuel and air; they change the fluodynamic of the process by increasing the turbulence and the velocity of the flame, enhance the return of activated species into the flame for a more rapid initiation of the ignition and combustion reactions.

These and other characteristics and advantages of the method of the invention will be better understood from the more detailed description which follows, while the accompanying drawings show three embodiments of the apparatus for carrying out said method and which includes a device for the automatic control of the application of the method to boiler and to internal combustion engines. In the accompanying drawings Figures 1, 2, 3 represents a bloc diagram of an apparatus for the application of the method of the invention, including a device for the automatic control of the used air, realized in three different embodiments, and in which Figures 1 and 2 concern embodiments for more general applications, while Fig. 3 is perculiar for the case in which internal combustion engines having a variable regime operation are concerned.

As previously reported, the present invention relates to the ionic composition of solutions having simple and inexpensive components (without any toxic heavy metal presence) and which can be easily found everywhere. These solutions are fed, in the form of aerosol with an air stream, suctioned from and/or compressed into an airconveyor duct to the manifolds or to the combustion chamber, so as to generate therein the thermal decomposition of the free radicals which are susceptible of optimizing the combustion in burners, internal combustion engines and the like.

- The apparatus for the application of the present invention provides the presence of devices for automatically controlling the air in the production system of aqueous aerosol.

The additives, which, according to the present invention, increase considerably the total efficiency of the combustion process, either reducing the energetic consumptions or limiting the noxious gaseous emissions and powders, comprise different ionic species dissolved in aqueous solution.

The ionic species are obtained by dissolving some saline components, such as $KNO_3$, $NH_4NO_3$, KCl, NaBr, $Mg(NO_3)_2$ which are thermally degradable with formation of free radicals and atomic oxigen, highly reactive, capable to push the oxidation ractions during the combustion towards the completeneness.

Other components, such as $H_2O$ and $NH_4^+$ are considered necessary in order to establish a reducing environment necessary for the reduction of nitrous oxides to elemental nitrogen.

The effect of the aforementioned ionic components is enhanced by the presence of basic components ($HCO_3^-$ ions, $Mg^{++}$ions and $Ca^{++}$ions) which are capable of neutralizing the acidity, generally present in the exhaust gases, due to the presence of HCl, HBr, $HNO_3$, $SO_2$, $SO_3$ etc. In particular Mg and Ca ions, in an oxidizing environment, form the corresponding oxides, already previously known for their neutralizing effect.

The formulation of the composition of the aqueous solution, which is an object of the present invention, includes other species, such as sulphate ions, which have the double purpose of decreasing the corrosion attack on the metallic surfaces by chlorinated compounds (NaCl, KCl, organo-chlorinates, etc.) and, at the same time, capable of acting as eterogeneous condensation nuclei during combustion so as to facilitate the nucleation of the unburned carbonaceous soot.

This latter phenomenon is particularly important especially for engines and burners fed with diesel-oil, which generate considerable amounts of soot and unburned particulates, measureable by instruments, such as the opacity-meter.

A relatively high quantity of NaCl, later on quantified, is also added to the aqueous solution containing the ionic species previously described, in order to lower the melting point of the solution, thus sheltering it from the low temperatures, and to furtherly facilitate the nucleation of unburned carbonaceous particles.

At least the evaporation of the solution is controlled by adding small amounts of an oily liquid, non mixable with water, and having a low specific weight, such as vaseline oil, which lies over the aqueous solution.

In a preferred, but not limitative embodiment of the invention, the solution is prepared, employing deionized and/or distilled water, in which the following salts of the kind and amounts within the following values, expressed as grams/liter, are dissolved:

NaCl from 26 to 40
$MgSO_4$ from14 to 80
$MgCl_2$ from3 to 5
$CaCl_2$ from2 to 7
KCl from1 to 28
$NaHCO_3$ from0,3 to 1
NaBr from0,09 to 1,5

$KNO_3$ from0,4 to saturated solution
$NH_4NO_3$ from0,5 to saturated solution
Said solutions have the following ionic compositions, expressed as moles/liter:

| | | | | | | | |
|---|---|---|---|---|---|---|---|
| $Na^+$ | from 0,48 to 0,71 | ; | $Cl^-$ | from 0,555 to 1,29 |
| $Mg^{++}$ | from 0,147 to 0,71 | ; | $SO_4^{--}$ | from 0,116 to 0,664 |
| $Ca^{++}$ | from 0,018 to 0,063 | ; | $HCO_3^-$ | from 0,035 to 0,012 |
| $K^+$ | from 0,017 to 3,14 | ; | $Br^-$ | from 0,0009 to 0,0146 |
| $NH_4^+$ | from 0,006 to 1,47 | ; | $NO_3^-$ | from 0,01 to 4,24 |

It is advisable to note, that the indicated ionic compositions can be obtained by dissolving, in deionized and/or distilled water, salts different but chemically equivalent to those aforementioned.

The method of the present invention is based on the informing principle that the feeding of the aerosol into any combustion zone must be guaranted, according to the possible regimes of variability of the thermal processes in which it is applied.

This method is carried out by using an improved apparatus comprising a conventional equipment for the aerosol production completed by a non-conventional device for the automatic control of the amount of the aerosol fed into the combustion zone, device which is capable to act in response to variations of the pressure within the air conveying duct into the combustion zone, or to variations of the rotation speed of the engine shaft of internal combustion engines.

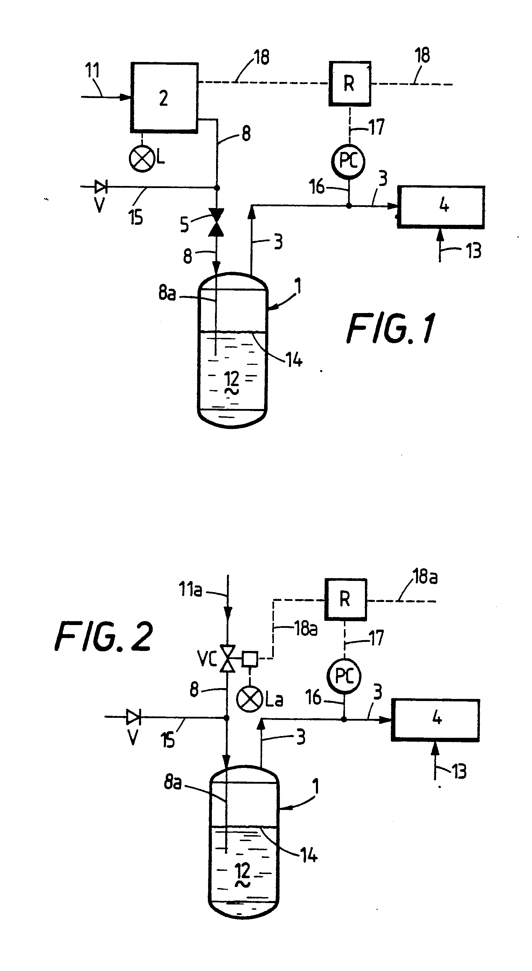

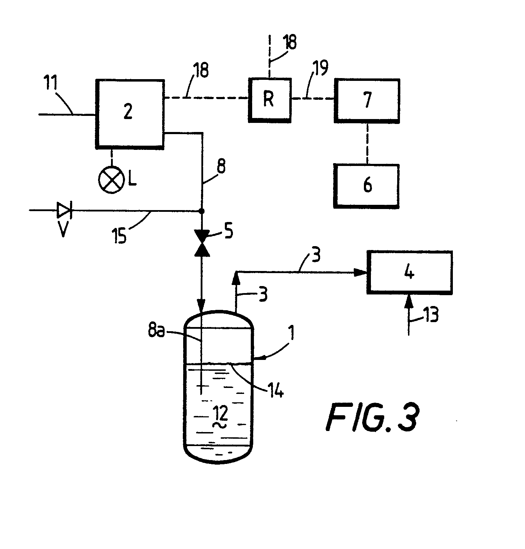

Said conventional equipment, as shown in Figures 1 and 3, comprises a duct 11 for the air inlet into a moto-compressor 2, which is connected by a duct 8 to a bubbling container 1. A manual controlled valve 5 is inserted in the tube 8 for setting the proper flux of the compressed air coming out of the moto-compressor 2.

Into the tube 8, upstream valve 5, a tube 15 ends, provided with a check valve V.

The container 1 has a preferably cylindrical shape and is vertically mounted.

Through the upper head of the container 1, near one of the ends of said head, the duct 8 is connected to an inner duct 8a which extends up to a short distance from bottom of the container 1 into which is placed the aqueous solution 12. At 3 is indicated a duct connected to the opposite end of the upper head of the container 1, to which duct 8 is connected, said duct 3 conveying the stream of the produced aerosol into the suction manifold 4 of the engine or in any analogous suction zone of other combustion systems, into which, through the duct 13, the remaining main stream of non-treated combustion air is fed, which is necessary for the combustion process.

The method of the present invention consists in the fact that part of the combustion air is caused to bubble into the container 1, filled with the aqueous solution 12 which is covered by an oily layer 14, said solution 12 containing the aforementioned ionic species, feeding then the obtained aerosol into the manifold 4 or in any other suction zone near the combustion chamber.

The air, fed by the tube 11, enters the moto-compressor 2 provided with an indicator lamp L.

After the air discharged from the moto-compressor 2, the air which is fed into the container 1, bubbles into the saline solution 12, placed in the container 1, where it is saturated with water vapor carrying together microscopical droplets of the solution 12 containing the ionic active species and, going through the overhanging oily layer 14 and, then, it is sent to the combustion zone 4 by the conveying duct or tube 3.

During the bubbling of the compressed air into the container 1 the overhanging oily substance 14 forms an emulsion with the water in such a way that a mono-molecular liquid membrane (few Å of thickness) covers every aqueous droplet (average diameter 2 - to 40 micrometers) of the solution, which constitutes the aerosol. In this way further advantages are obtained, as the protection of the metallic parts which can come into contact with the corrosive saline solution, as well as a controlled dehydration of the salts present in the aerosol at the high temperature near the combustion zone.

It is to be noted, however, that the moto-compressor 2, in certain cases is no more necessary, since, when, said apparatus is installed on motor-vehicles having an auxiliary output of compressed air, this output can be used to feed compressed air into the container 1 by a duct 11a controlled by an electro-valve VC which normally closes and which is provided with control means (Figure 2). Therefore in this embodiment the task of valve 5 is accomplished by said electro-valve VC.

The tube 15 is connected to the tube 8 downstream said electro-valve VC, said duct 15 being provided with a check valve V.

As in the case of Fig. 1, the duct 8 conveys air into the container 1.

- The aerosol is fed into the combustion chamber with a flow rate corresponding to a consumption of some microliter of the saline solution per second. At the same time the fuel flow rate is about 1000 times greater than that of the aerosol.

On the base of quantitative evaluations it can be said that the ionic speicies have to be added according to weight ratios, in the order of some tens per million with respect to the fuels mass with which they will be mixed. The novelty of the present invention, as far as the apparatus to be used is concerned, refers to the presence of a control device, either of pneumatic or of electric type, for the control of the flow rate of air fed into the equipment designed to produce aerosol enriched by the particular additives, heretobefore mentioned.

Thus, now referring to Fig. 1, it is to be noted that downstream the bubbling container 1, to duct 3, conveying the aqueous aerosol to the suction manifold 4, through a shunted duct 16, a pressure switch PC is connected, which works in depression and which is designed to control the combustion process.

The pressure switch PC is electrically connected, by the line 17, to a relais R which controls the opening and closing of the electric line 18 feeding current to the air moto-compressor 2.

The pneumatic control system of the compressed air stream takes place in the following manner, for instance, when applied to an engine of the diesel kind. As the engine idles or during the low engine regimes, the engine counterpressure causes the pressure switch PC to detect in the duct 3 a pressure (of the order of some tenths of p.s.i.) from the suction manifold 4 towards the bubbling container 1. In such conditions the pressure switch PC transmits a signal to the relais R which let close the electric line 18, i.e. it gives the consent to the feeding of electric current to the air moto-compressor 2, which becomes operative.

At the same time the indicator lamp LED L lights, thus indicating that the moto-compressor 2 is operative, and pumps air into the container 1 and, therefore, aerosol is fed to the suction manifold 4 of the engine.

As soon as the number of revolutions of the engine shaft increases, the counterpressure in the suction manifold 4 decreases progressively up to zero and up to become negative. In such a condition which takes place in an interval of the revolution regimes of diesel engines higher than values comprised between 1000 and 2000 rpm according to the kind of the considered engine, the suction manifold 4 goes in depression. Thus the pressure switch PC will detect the pressure variation within the duct 3 so that it will cause the communication of relais R which causes the opening of the electric line 18 and therefore the interruption of the air moto-compressor operation; at the same time the indicator lamp L will be switched off.

As depressure conditions establish during high revolution regimes, the suction from engine will cause the air to bubble within the container 1 and this air can be taken either from the filter (not shown) of the moto-compressor 2, which is now no more operative, or from the duct 15, through the check valve V, duct which is branched off of the duct 8. The aerosol which comes out of the bubbling container 1, enriched in water vapor, will be then sucked into the manifold 4 of the engine.

As the revolution number of the engine decreases, the pressure switch PC will detect such pressure conditions so as to cause again the operation of the moto-compressor 2 (Fig. 1) in an entirely automatic manner.

In the case in which the motor vehicle is provided with an auxiliary outlet orifice of compressed air, provision is made that in the control device shown in Fig. 2, the relais R controls an electric line 18a controlling the electro-valve VC, whic normally closes and which is connected with the indicator lamp La; in response to the pressure conditions detected by the pressure switch PC, the relais R acts in an entirely analogous manner as described with reference to Fig. 1, causing the electro-valve VC to open and the indicator lamp La to light.

Another embodiment of the invention, shown in Fig. 3, is based on the use of an electric signal given in response to predetermined values of the revolution number of the engine shaft, taken at the output of an electric device 6 already installed on the internal combustion engines (coil, alternator, booster).

The electric signal is taken from the interface 7 of the device 6, said signal, being proportional to the revolution number of the driving shaft of the engine, is sent through the line 19 to the relais R which causes the closure of the electric current line 18 feeding current to the moto-compressor 2 of air, when the revolution regime of the engine is not higher than about 1500 revolution/minute, thus performing a control of the aerosol flow rate required by the engine. Identically through the line 19 the relais R could be commutated so as to close the electric line 18a controlling the opening of the electro-valve VC in a variant, not shown in the drawings, but similar to that of Fig. 2.

At last it is also necessary to point out, that in some combustion systems, (such as burners, explosion engines, boilers), the duct 3 conveying the air into the combustion chamber is always in depression. In these cases the apparatus is realized without the air moto-compressor 2 or the electro-valve VC, by only mounting a filter in the air intake orifice of the duct 8 (not shown in the drawings) and connecting the outlet duct 3 of the container 1 to the carburator underneath the butterfly valve or to the air suction manifold 4 of the cylinders, or in a depressure zone of the burner, said variants being accessible to any person skilled in the art.

The container can have any shape and size, the shape and sizes of the bubbling container 1 are "per se" known so that they do not pertain to the present invention and can be constituted of many different kinds of constructions. Good results have been obtained, as far as internal combustion engines are concerned, using a cylindrical vertical container 1 of a diameter of about 80 mm and on a height of 270 mm, to the upper head of which an inlet duct 8 and an outlet duct 3 are connected of a diameter of 5 mm. The inlet duct 8 is connected with an inner tube 8a which extends to a short distance from the bottom of the container 1 where it is cut as a flute mouthpiece, in order to increase the dimensions of the bubbled bubbles. Advantageously the interface of the oily layer 14 is at a distance of about 120 mm from the upper head of the container 1. The volume of the aqueous solution is of about 0,5 liters.

It has been proved that the apparatus for the application of the method according to the present invention carries out effectively its action without any need for maintenance for a running time corresponding to a distance of 15.000 km. Afterwards it is necessary to fill again the container 1 with solution 12 to be bubbled.

The following examples refer to some application of the present invention.

It is to be noted that the corresponding amounts of the salts, added in the solution 12, have been varied according to the kind of the fuels which have been employed and to the characteristics of the considered motor-vehicles

Example 1

The apparatus was installed on a motor-vehicle of the Mercedes 300 D type (about 380.000 km covered). The used solution composition is indicated in Table 1 (Example 1).

Table 1

Composition of bubbling solutions employed in the Examples 1 to 3

| Components | Example 1 (g/l) | Example 2 (g/l) | Example 3 (g/l) |
|---|---|---|---|
| NaCl | 26,11 | 26,11 | 26,11 |
| $MgSO_4$ | 16,2 | 19,0 | 10,05 |
| $MgCl_2$ | 3,66 | 3,66 | 3,66 |
| $CaCl_2$ | 2,13 | 2,13 | 2,13 |
| KCl | 2,25 | 2,25 | 1,046 |
| $NaHCO_3$ | 0,326 | 0,326 | 0,326 |
| NaBr | 0,0967 | 0,0967 | 0,0967 |
| $KNO_3$ | 1,666 | 2,364 | 5,25 |
| $NH_4NO_3$ | 2,5 | 3,664 | 8,24 |

The measurement of the opacity of the exhaust gases was effected before and after the installation of the apparatus. In each group of five measurements the highest and the lowermost were excluded and the average of the three remaining measurements was considered.

The average values obtained were the following:
exhaust gas opacity without the apparatus = 58%
exhaust gas opacity with the apparatus = 33,3%
decrease on percentage = 42,6%

Example 2

The apparatus was installed on a motorbus of Menarini type (20 HP, about 636.000 km. covered). The bubbling solution had the composition indicated in Table 1 (Example 2).

Average values of the exhausted gas opacity, measured before and after the installation of the apparatus, were the following ones:
exhaust gas opacity without apparatus = 66,3%
exhaust gas opacity with apparatus = 37,3%
decrease on percentage = 43,7%

Example 3

Some bench tests were effected using an engine of the Golf 1,1 liters type (year 1974) and the carbon oxide (CO) emissions were analized according to the revolution regime of the engine, either without or with the apparatus in question.

After the initial tuning of the engine, the following values, without the use of the apparatus, were obtained: power - KW/DIN HP = 37/50; maximum r.p.m. = 6.000 revolutions per minute; minimum r.p.m. = 900 revolutions per minute; fixed fit/advance = 10°; carbon oxide emission in the exhaust gases = 2,7% CO.

The results obtained in the tests, without or with the apparatus, are indicated in the Table 2 (Example 3).

Table 2

Results obtained in bench tests carried out on an engine of Golf 1,1 liters type (year 1974). Fixed fit advance = 10°.

| Revolutions minute | kg/m | | CO% | | Power HP | | Increase |
|---|---|---|---|---|---|---|---|
| | without | with | without | with | without | with | power % |
| 1500 | 5,3 | 7,0 | 2,7 | 0,8 | 7,95 | 10,5 | +32,1 |
| 2000 | 6,6 | 8,8 | NM | 0,2 | 13,2 | 17,6 | +33,3 |
| 2500 | 7,4 | 10,5 | NM | 0,15 | 18,5 | 26,2 | +41,6 |
| 3000 | 8,2 | 10,8 | NM | 0,15 | 24,6 | 32,4 | +31,7 |
| 3500 | 8,7 | 11,9 | NM | 0,15 | 30,45 | 41,4 | +36,0 |
| 4000 | 9,8 | | | | 39,2 | | |
| 1500(*) | | 7,0 | | 0,4 | | 10,5 | |

(*) when the fixed fit advance was displaced of 5° with the engine running at minimum at 700 r.p.m.

NM = Not measured

These data show a considerable reduction of the carbon oxide content in the exhaust gases after the installation of the apparatus (for instance, the CO goes from 2,7% to 0,8% at 1500 r.p.m.).

The diminution of the CO becomes more evident after a displacement of the fit advance of 5° (emitted CO = 0,4% at 1500 r.p.m.).

It interests to point out that with an equal regime condition the power, which the engine can deliver considerably increases up to values comprised between 30 and 40%.

Example 4

Measurements of the exhaust gas opacity on a motor vehicle Fiat of the Ducato type having a diesel engine of the kind 2500 Sofim, year 1980, (about 190.000 km covered) have been carried out.

The exhaust gas opacities emitted by said motor vehicle, without and with apparatus installation, were measured, in which apparatus solutions to be bubbled of different composition have been employed, as indicated in Table 3.

Table 3

Composition of the solutions to be bubbled used in the Example 4 and obtained results:

average opacity of exhaust gases without and with apparatus installation = 53,3 %.

| Components (g/l) | tests 1 | 2 | 3 | 4 | 5 | 6 |
|---|---|---|---|---|---|---|
| $H_2O$ | 1000 | 1000 | 1000 | 1000 | 1000 | 1000 |
| NaCl | | 300 | | | 26,11 | 26,11 |
| $MgSO_4$ | | | 14,0 | | 20,0 | 20,0 |
| $MgCl_2$ | | | 3,7 | | 3,7 | 3,7 |
| $CaCl_2$ | | | | | 2,13 | 2,13 |
| KCl | | | | | 1,046 | 1,046 |
| $NaHCO_3$ | | | | | 0,326 | 0,326 |
| NaBr | | | | | 0,0967 | 0,0967 |
| $KNO_3$ | | | | 2,5 | 2,5 | 10,0 |
| $NH_4NO_3$ | | | | 3,5 | 3,5 | 15,0 |
| OVERAGE OPACITY OF EXHAUST GASES(%) | 51,5 | 51,5 | 44,5 | 35,0 | 34,5 | 31,5 |
| DECREASE (%) | 3,3 | 3,3 | 16,5 | 34,3 | 35,3 | 40,9 |

Table 3 shows that in the tests No. 1 and 2, in which distilled air and an aqueous solution at 30% of sodium chloride have been bubbled, the percentage decrease of the opacity has been low (about 3,3%).

In test No. 3, in which magnesium salts ($MgSO_4$ = 14 g/l + $MgCl_2$ = 3,7 g/l) were employed, the percentage decrease was 16,5%.

Better results have been obtained by bubbling water vapor, saturated with nitrates in the test No.4 ($KNO_3$ = 2,3 g/l + $NH_4$ = 3.5 g/l). In this case the opacity of the exhaust gases increased up to 34,3%; this value can be compared with that obtained in the solution bubbling of the test No. 5, in which the solution contained all the salts present (opacity decrease in the exhaust gases = 35,3%). It is to be noted, at last, that the results, obtained in the test No.6 (opacity decrease of the exhaust gases of 40,9%) are substantially equal to those of the test No. 5. In the test No.6 a solution of a composition equal to that of the test No.5 was used, with the sole difference of a $KNO_3$ increment from 2,5 to 10g/l and a $NH_4NO_3$ increment from 3,5 to 15 g/l.

That makes evident that higher amounts of additives do not give significative efficiency increments in the combustion process.

It can be also said that the prevalent effect on the decrease of the exhaust gas opacity, and therefore on the solid unburned particulates, which the diesel engines produce, is due prevalently to the presence of the ionic species which are present in the aerosol fed in the zone of the combustion chamber.

## Claims

1. - A method for optimizing combustion processes using commercial fuels, in order to reduce the energetic consumptions, the amounts of the noxious gas emission and pollutants, increasing, in the same time, the overall process efficiency of the combustion characterized by the feeding of a stream of aqueous aerosol into the air duct-conveyor of combustion chamber, said aerosol containing some dissolved salts which dissociate in the aqueous solution, from which the aerosol is formed, giving origin to at least one of the following ionic species:

a) nitrate ions, potassium ions, chloride ions, bromide ions which, due to a thermal degradation in the flame, produce free radicals and oxygen;

b) ammonium ions, which give rise to a reducing environment;

c) calcium ions magnesium ions and bicarbonate ions, suitable to neutralize the acidity present in exhaust gases;

d) sulphate ions which promote the nucleation of the unburned carbonaceous particulates, said method comprising:

- supplying a part of the air required for combusiton, fed through suction and/or compression in a chamber in which an aqueous solution which is coated by a thin layer of oily liquid not mixable with the water, such as vaseline oil, is contained:
- bubbling of said air in the solution, the saturation of said air with the water containing the ionic species dissolved in the solution;
- conveying the stream of aqueous aerosol so formed into the conveyor-duct of the combustion zone of burners, internal combustion engines and the like, or into any duct where the untreated combustion air is generally supplied.

2. - A method according to claim 1, wherein the aqueous solution has the following composition, expressed in moles/liter, said composition being obtained by dissolving in deionized and/or distilled water, salts of the aforementioned types or other salts chemically equivalent.

| | | | | | | | | |
|---|---|---|---|---|---|---|---|---|
| $Na^+$ | from 0,48 | to 0,71 | ; | $Cl^-$ | from 0,555 | to 1,29 |
| $Mg^{++}$ | " 0,147 | " 0,71 | ; | $SO_4^{--}$ | " 0,116 | " 0,664 |
| $Ca^{++}$ | " 0,018 | " 0,063 | ; | $HCO_3^-$ | " 0,035 | " 0,012 |
| $K^+$ | " 0,017 | " 3,14 | ; | $Br^-$ | " 0,0009 | " 0,0146 |
| $NH_4^+$ | " 0,006 | " 1,47 | ; | $NO_3^-$ | " 0,01 | " 4,24 |

3. - A method according to claim 1, wherein the ionic solution is originated by dissolution in deionized and/or distilled water of salts of the aforementioned type (or chemically equvalent to these latter) and in the following amounts,
expressed in grams/liter:
NaCl from 26 to 40
$MgSO_4$ from 14 to 80
$MgCl_2$ from 3 to 5
Ca $Cl_2$ from 2 to 7
KCl from 1 to 28
$NaHCO_3$ from 0,3 to 1
NaBr from 0,09 to 1,5
$KNO_3$ from 0,4 to saturated solution
$NH_4NO_3$ from 0,5 to saturated solution

4. A method according to claim 1, wherein the preferred aqueous ionic solution , in the case of use in internal combustion engines for motor vehicles, in particular gasoline engines, is obtained by dissolving, in deionized and/or distilled water, salts of the type or salts chemically equivalent) and in the amounts, expressed in grams/liter:
NaCl 26,11
$MgSO_4$ 20,0

$MgCl_2$ 3,66
$CaCl_2$ 2,13
KCl 1,046
$NaHCO_3$ 0,326
NaBr 0,0967
$KNO_3$ 2,5
$NH_4NO_3$ 3,5

5. An improved apparatus for the application of the method, according to claim 1, to combustion apparatus, such as internal combustion engines, heat generators, boilers, furnaces and the like and in which a conventional equipment for producing aerosol is utilized, comprising an air feeding duct (8) provided with a control valve (5), where a duct (8a), connected to the pipe (8) enters into a bubbling container (1) through an inlet orifice arranged near one end of the upper head of said container (1) which contains the aqueous saline solution for producing aerosol; said container (1) being connected to a duct (3) arranged at the other end of said upper head of the container (1), said duct (3) being connected to the element(4) , into which the not treated air portion for the combustion process is fed, through an air duct (13), characterized by the fact, that said conventional equipment (8, 8a, 1, 3) operates under the control of a non-conventional device, suitable to detect predetermined conditions of the combustion process and which comprises a sensor means (PC; 6, 7) capable of transmitting a signal, as a response to the detection of the aforementioned, conditions, to a relais (R), said relais (R) being provided to control the feeding and the bubbling into the container (1) of the air utilized for the production of the aerosol.

6. - An improved apparatus according to claim 5, wherein the equipment (8, 8a, 1, 3) for the production of the aerosol comprises an air suction duct (11), joined to a moto-compressor (2) connected to a power line (18), said moto-compresssor (2) having the delivery duct (8), provided application of the method, according to claim 1, to internal combustion engines, wherein the sensor means consists in a known device (6) capable of detecting the number of revolutions of the motor-shaft of the engine and which, within a range of predetermined values of the number of revolutions, supplies a signal, by means of line (19) through the interface (7) which switches over the relais (R) so as to close the power line (18) of the moto-compressor (2), or the electric line (18a) which allows the electrovalve (VC) to open.

11
2
18
R
18
L
8
17
PC
V
15
16
3
4
5
3
8
13
8a
1
14
12

FIG. 1

FIG. 2

11a
R
18a
18a
17
VC
8
La
PC
16
3
4
V
15
3
13
8a
1
14
12

18
11
2
18
R
19
7
L
8
6
V
15
5
3
4
3
13
8a
1
14
12
FIG.3

European Patent Office

# EUROPEAN SEARCH REPORT

Application Number

EP 87 83 0448

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 362 130 (ROBINSON) * Column 3, line 10 - column 6, line 66 * | 1-7 | F 02 B 47/04<br>F 23 L 7/00<br>C 10 L 1/10 |
| A | US-A-4 014 637 (SCHENA) * Column 4, line 3 - column 5, line 52 * | 1-7 | |
| A | GB-A- 562 649 (GRANT-SMITH) * Whole document * | 1-4 | |
| A | US-A-3 342 733 (ESSO) * Column 7, lines 19-58 * | 1-4 | |
| A | US-A-2 636 342 (PHILLIPS PETROLEUM) * Column 5, lines 14-38 * | 1-4 | |
| A | CHEMICAL ABSTRACTS, vol. 50, no. 2, 1956, column 1285, abstract no. 24624-'54 (13034), Columbus, Ohio, US; B.O. BUCKLAND et al.: "Modified residual fuel for gas turbines", & TRANS. AM. SOC. MECH. ENGRS. 77, 1199-1209(1955) | | |

TECHNICAL FIELDS SEARCHED (Int. Cl.4)

F 02 B
F 23 L
C 10 L

The present search report has been drawn up for all claims

| Place of search | Date of completion of the search | Examiner |
|---|---|---|
| THE HAGUE | 16-03-1988 | WASSENAAR G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document